# DEMANDE DE BREVET EUROPEEN

(11) **EP 1 847 433 A2**
(43) Date de publication de la demande: **24.10.2007**
(21) Numéro de dépôt: 07007861.3
(22) Date de dépôt: 18.04.2007
(51) Int. Cl.: B60T 13/57, B60T 13/575

(54) **Servofrein à rapport d'assistance variable, organe d'assistance et organe de sortie d'un tel servofrein**

(30) Priorité: 19.04.2006 FR 0603763
(71) Demandeur: ROBERT BOSCH GMBH, 70442 Stuttgart (DE)
(72) Inventeur: Attard, Jean-Marc, 60340 Villers Sous St Leu (FR); Sprocq, Raynald, 77450 Esbly (FR)
(74) Mandataire: Hurwic, Aleksander Wiktor

(57) **Abrégé**

Cette invention concerne un servofrein d'axe (201) et commandé par une force de commande appliquée à un organe de délestage coulissant dans un conduit (236) axial interne d'un organe d'assistance (200) du servofrein, un côté de sortie de l'organe d'assistance exerçant à son tour la force de commande sur une face d'entrée (222) d'un élément de réaction (208) élastique, le côté de sortie de l'organe de délestage comprenant des moyens mobiles (216) axialement.

Une telle invention est caractérisée en ce que le servofrein comprend une butée de vitesse (218) pour, lorsque l'organe de délestage est déplacé dans le conduit (236) vers l'élément de réaction (208) par rapport à l'organe d'assistance (200), arrêter la course des moyens mobiles (216) vers la face d'entrée (222) de l'élément de réaction (208).

## Description

La présente invention se rapporte principalement à un servofrein d'assistance au freinage à rapport d'assistance variable, à un organe d'assistance et à un organe de sortie d'un tel servofrein. Cette invention s'applique notamment au domaine des systèmes de freinage de véhicules.

Un servofrein d'assistance au freinage est utilisé dans un véhicule pour amplifier automatiquement une commande de freinage générée soit par le conducteur du véhicule soit par un dispositif automatique, afin d'assurer un freinage adéquat de ce véhicule.

L'art antérieur comporte de nombreuses descriptions de servofreins.

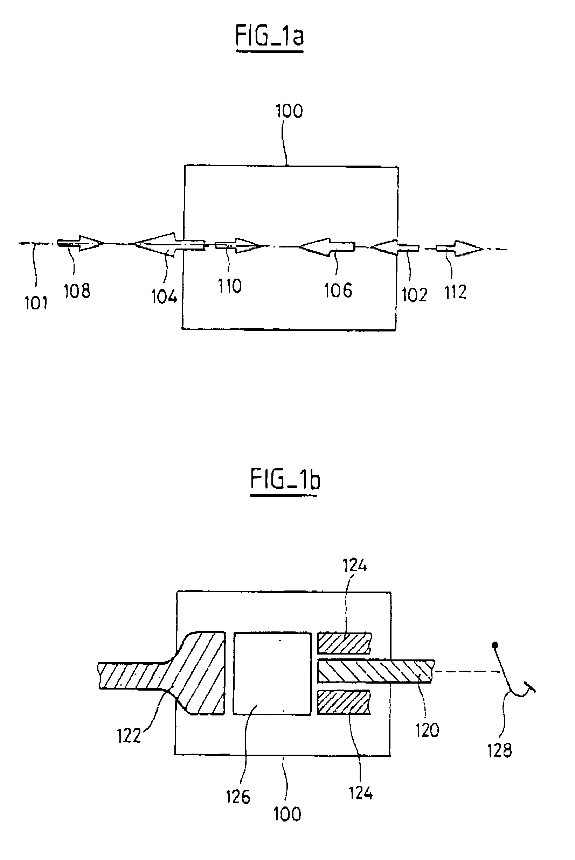

La figure la représente schématiquement des forces agissant dans un servofrein 100 et la figure 1b représente schématiquement des organes du servofrein 100 exerçant ou subissant ces forces. Ce servofrein 100 ;
- reçoit une force de commande 102 en entrée à travers un organe d'entrée 120 (en général une tige de commande),
- génère et ajoute une force d'assistance 106 au travers d'un organe d'assistance 124 (en général, un piston) en fonction de l'intensité de la force de commande 102, le long de son axe 101,
- fournit une force de sortie assistée 104 en sortie à un organe de sortie 122 (en général une tige de poussée).

L'organe de sortie 122 appliquant la force de sortie 104 à un autre dispositif (en général un maître-cylindre quand il s'agit d'un système de freinage d'un véhicule à moteur), cet autre dispositif renvoie une force de réaction 108 au servofrein 100 par l'intermédiaire de l'organe de sortie 122.

Cette force de réaction 108 se décompose ensuite en une partie remontant à l'organe d'assistance 124, dénommée force de réaction absorbée 110, et en une autre partie remontant à l'organe d'entrée 120, dénommée force de résistance 112.

Ce transfert des forces entre l'organe d'entrée 120, l'organe d'assistance 124 et l'organe de sortie 122 se fait à travers un dispositif de réaction 126 qui comprend en général un élément de réaction élastique (par exemple un disque en caoutchouc).

Si le servofrein 100 est utilisé pour assister un freinage commandé par une pédale 128 actionnée par le pied d'un conducteur, ce dispositif de réaction 126 permet au conducteur d'avoir un retour d'informations (sensations) au niveau du pied ; ces sensations lui permettent d'ajuster l'intensité de la force qu'il exerce sur la pédale 128 et donc l'intensité de la force de commande 102.

L'intensité de la force de résistance 112 va notamment s'opposer à la force qu'il exerce sur la pédale 128 pour commander le freinage.

On définit un rapport, dénommé rapport d'assistance, égal au rapport de l'intensité de la force de sortie 104 (dividende) sur l'intensité de la force de commande 102 (diviseur).

Plus ce rapport est élevé, plus il est facile pour le conducteur de freiner.

L'art antérieur propose plusieurs solutions techniques, notamment la demande internationale ayant comme numéro de publication WO02/064411A2, au problème de concevoir un servofrein dont le rapport d'assistance augmente quand l'intensité de la force de commande 102 augmente pour aider le conducteur lors d'un freinage important.

Cette demande internationale propose une solution qui fait coopérer l'élément de réaction élastique avec un organe de changement de rapport d'assistance au freinage ou organe de délestage, comprenant un moyen mobile venant, au delà d'un certain seuil d'intensité de la force de commande, s'appuyer sur une butée de délestage (référence 11 de la figure 1 de la demande précitée) usinée ou fixée à l'intérieur du boîtier de contrôle ou organe d'assistance ou piston du servofrein) afin notamment de transformer, une partie de la force de résistance 112 en force de réaction absorbée 110 supplémentaire.

L'effet de seuil est obtenu par l'utilisation de moyens élastiques pré-contraints qui se compriment au delà d'un seuil d'intensité de force reçue.

La présente invention résulte d'une constatation: l'art antérieur propose des solutions pour faire varier le rapport d'assistance au freinage en fonction seulement du paramètre de l'intensité de la force de commande.

Or il s'avère qu'il est important pour améliorer la sécurité du véhicule, de faire varier le rapport d'assistance dès le début d'un freinage brusque en fonction du paramètre de la vitesse d'application de la force de commande.

C'est à dire de faire varier le rapport d'assistance lorsqu'on commande un freinage en un temps très court.

Cette invention propose une solution au problème d'augmenter le rapport d'assistance au freinage au delà d'une certaine vitesse d'application de la force de commande.

Cette invention concerne un servofrein d'assistance au freinage ayant un axe et commandé par une force de commande appliquée axialement à un organe de délestage coulissant dans un conduit axial interne d'un organe d'assistance du servofrein, un côté de sortie de l'organe de délestage exerçant à son tour la force de commande sur une face d'entrée, perpendiculaire à l'axe, d'un élément de réaction élastique, l'organe d'assistance exerçant sur cette face d'entrée une force d'assistance générée par le servofrein, le côté de sortie de l'organe de délestage comprenant des moyens mobiles axialement.

Un tel servofrein est caractérisé en ce qu'il comprend une butée de vitesse pour, lorsque l'organe de délestage est déplacé dans le conduit vers l'élément de réaction par rapport à l'organe d'assistance, arrêter la course des moyens mobiles vers la face d'entrée de l'élément de réaction.

Cette butée de vitesse évite donc que les moyens mobiles ne viennent au contact de l'élément de réaction lors d'un freinage impliquant le mouvement de l'organe de délestage vers l'élément de réaction par rapport à l'organe d'assistance, dénommé freinage d'urgence ou freinage à haute vitesse d'application.

En effet, au delà d'un seuil de vitesse d'application de la force de commande, dénommé seuil de vitesse, l'organe de délestage parcourt la distance le séparant de l'élément de réaction dans un temps plus court que le temps, dénommé constante de réaction, nécessaire au servofrein pour générer la force d'assistance et pour déplacer l'organe d'assistance vers l'élément de réaction.

Les moyens mobiles de l'organe de délestage trouvent alors, dans leur course vers l'élément de réaction, la butée de vitesse.

Les moyens mobiles sont alors arrêtés alors que le reste de l'organe de délestage continue sa course vers l'élément de réaction et rentre en contact avec ce dernier : la surface de la face d'entrée de l'élément de réaction en contact avec l'organe de délestage, dénommée surface de commande, est alors réduite.

En effet, la surface de commande ne comprend pas alors la surface de l'élément de réaction en vis-à-vis des moyens mobiles.

Il est ainsi possible de réduire la surface de commande de la face d'entrée de l'élément de réaction où l'organe de délestage exerce la force de commande lorsque la vitesse d'application de la force de commande devient suffisante, c'est à dire dépasse le seuil de vitesse.

En dessous du seuil de vitesse, lors de l'application de la force de commande, le servofrein a le temps de générer la force de commande et l'organe d'assistance avance vers l'élément de réaction avec l'organe de délestage.

Puis, l'élément de réaction subissant la force d'assistance se déforme, envahit le volume le séparant de l'organe de délestage et rentre en contact avec le côté de sortie de l'élément de réaction, et notamment avec les moyens mobiles, Les moyens mobiles ne rencontrent pas alors la butée de vitesse.

Le seuil de vitesse peut être prévu à la conception du servofrein car il est directement lié à la constante de réaction du servofrein.

Généralement, comme l'élément de réaction est logé dans un logement fermé d'un côté par l'organe d'assistance apportant la force d'assistance et par l'organe de délestage, et de l'autre côté par un organe de sortie recevant la force de sortie du servofrein, l'élément de réaction élastique se comporte sensiblement comme un liquide incompressible.

La surface sur laquelle l'élément de réaction exerce la force de sortie sur l' organe de sortie est dénommée surface de sortie.

Le rapport d'assistance, défini comme le rapport de l'intensité de la force de sortie par l'intensité de la force d'entrée, est aussi égal au rapport de la surface de sortie sur la surface de commande.

Le conducteur est donc aidé notamment lors d'un freinage d'urgence impliquant une vitesse de freinage élevée.

Cette invention permet avantageusement aussi de concevoir un servofrein qui change de rapport d'assistance selon un ou deux paramètres, l'intensité de la force de commande et/ou la vitesse de son application (ce dernier paramètre de changement de rapport étant propre à cette invention).

La force de commande peut être appliquée à l'organe de délestage, dans certaines réalisations, par un moyen de distribution commandant aussi l'assistance du servofrein, ce moyen de distribution recevant cette même force de commande d'une tige de commande.

Dans d'autres réalisations, le moyen de distribution est inclus dans l'organe de délestage, ce dernier recevant directement la force de commande d'une tige de commande.

Selon une réalisation, les moyens mobiles coopèrent avec des moyens élastiques de rappel qui, quand les moyens mobiles se déplacent par rapport à une partie de l'organe de délestage axialement incompressible, se déforment élastiquement pour exercer sur les moyens mobiles une force de rappel tendant à les ramener à leur position de repos dans l'organe de délestage, correspondant à leur position dans l'organe de délestage quand le servofrein est au repos.

Le servofrein est au repos quand il ne subit aucune force de commande.

Les moyens élastiques de l'organe de délestage peuvent comprendre notamment :
- un ressort interne à l'organe de délestage qui est alors comprimé quand les moyens mobiles subissent une force supérieure à la charge du ressort,
- un jonc ou une agrafe coopérant à la fois avec l'organe de délestage et avec l'organe d'assistance.

Les moyens élastiques peuvent être pré-contraints.

Dans une réalisation, le servofrein comprend une butée d'intensité pour retenir les moyens mobiles et absorber la partie de la force de réaction que les moyens mobiles subissent de l'élément de réaction, quand :
- cette partie de la force de réaction dépasse la force de résistance opposée que les moyens élastiques appliquent sur les moyens mobiles et
- les moyens mobiles se déplacent par rapport au reste de l'organe de délestage vers le côté opposé axialement au côté de sortie de l'organe de délestage, dénommé côté d'entrée, jusqu'à la butée d'intensité,

Grâce à la butée d'intensité, ce mode de réalisation de l'invention permet avantageusement de provoquer une augmentation du rapport d'assistance, en faisant diminuer la surface de commande, quand l'intensité de la force de commande dépasse un seuil d'intensité de la force de commande, dénommé seuil d'intensité.

En effet, au delà du seuil d'intensité, l'effort de la pression interne de l'élément de réaction s'appliquant axialement sur les moyens mobiles, devient supérieur à la charge au repos (ou à sa valeur de pré-contrainte) des moyens élastiques.

La pression interne de l'élément de réaction est fonction de l'intensité de la force de commande, ce qui permet de prévoir le seuil d'intensité à partir duquel le rapport d'assistance augmente.

Si les moyens élastiques sont pré-contraints, il faut un certain niveau de force de compression, opposée à leur charge quand le servofrein est au repos, pour les comprimer, ce qui apporte un effet de seuil d'intensité de la force de commande au delà duquel les moyens mobiles se déplacent par rapport au reste de l'organe de délestage.

La butée d'intensité intervient alors quand la force de commande dépasse le seuil d'intensité, la pression exercée par l'élément de réaction sur les moyens mobiles étant fonction de cette force de commande.

La butée d'intensité peut être entre les coordonnées axiales du côté de sortie et du côté d'entrée de l'organe de délestage, lorsque le servofrein est au repos.

Ce mode de réalisation de l'invention permet donc avantageusement de réaliser un servofrein comprenant une butée de vitesse et une butée d'intensité.

Selon une réalisation, la butée de vitesse est solidaire de l'organe d'assistance.

Les moyens mobiles coulissant dans un conduit interne de l'organe d'assistance, la butée de vitesse est donc, dans ce mode de réalisation, solidaire de l'organe d'assistance qui supporte donc l'effort axial transmis par les moyens mobiles, évitant ainsi que cet effort soit transmis à l'élément de réaction.

Cette butée de vitesse peut être notamment une partie de l'organe d'assistance, usinée de façon à ce que cette partie limite la course des moyens mobiles vers l'élément de réaction ou/et un élément fixé à l'organe d'assistance.

Dans une réalisation, les moyens mobiles coulissant à l'extrémité radiale de l'organe de délestage autour d'une partie axialement incompressible de l'organe de délestage, la butée de freinage comprend une saillie sur la paroi du conduit où coulisse l'organe de délestage, la saillie limitant la course axiale des moyens mobiles vers l'élément de réaction sans limiter la course axiale de la partie axialement incompressible de l'organe de délestage vers l'élément de réaction.

Cette saillie peut être notamment réalisée par un resserrement du conduit (diminution de son diamètre) ou par l'ajout d'un élément fixe par rapport à l'organe d'assistance.

Cette réalisation implique que les moyens mobiles coulissent à l'extérieur de l'organe de délestage, autour d'une partie incompressible de l'organe de délestage, le côté de cette partie incompressible en vis-à-vis de l'élément de réaction, vient au contact de ce dernier lors d'un freinage d'urgence.

Selon une réalisation, les moyens élastiques comprenant une agrafe élastique incluant deux brins droits parallèles reliées entre eux, l'agrafe étant comprise dans un plan perpendiculaire à l'axe et traversant l'organe d'assistance, un brin de cette agrafe traverse les moyens mobiles, cette agrafe se déplaçant avec les moyens mobiles en translation axiale dans une fente limitée d'un côté par un plan de butée de vitesse de l'organe d'assistance perpendiculaire à l'axe, la butée de vitesse étant le plan de butée de vitesse limitant la course en translation axiale vers l'élément de réaction de l'agrafe et des moyens mobiles, quand l'organe de délestage est déplacé dans le conduit vers l'élément de réaction par rapport à l'organe d'assistance.

Ce mode de réalisation évite avantageusement d'avoir à usiner l'intérieur du conduit de l'organe d'assistance où coulisse l'organe de délestage pour y réaliser une saillie limitant la course des moyens mobiles.

Cette réalisation simplifie la réalisation du servofrein car il évite d'utiliser un ressort pré-contraint interne à l'organe de délestage.

La fabrication du servofrein est simplifiée car on peut placer dans le conduit les pièces devant y coulisser et par un côté de l'organe d'assistance, introduire l'agrafe de façon à ce qu'un de ses brins droits passe au travers des moyens mobiles.

L'agrafe étant arrêtée quand l'organe de délestage est déplacé dans le conduit vers l'élément de réaction par rapport à l'organe d'assistance, par le plan de butée de vitesse interne à l'organe d'assistance, cette agrafe ne subit pas alors de force de torsion qui la torde en modifiant sa planéité.

Dans une réalisation, l'organe de délestage comprend ;
- un moyen rigide de révolution, ce moyen rigide présentant sur une partie en pente un changement de diamètre, le moyen rigide ayant un diamètre inférieur sur sa partie plus proche de l'élément de réaction.
- les moyens mobiles coulissant autour du moyen rigide,
et le brin de l'agrafe traversant les moyens mobiles coopère avec la partie en pente du moyen rigide quand l'agrafe vient en butée contre le plan de butée de vitesse et que le moyen rigide continue son mouvement vers l'élément de réaction.

Cette réalisation utilise l'élasticité de l'agrafe ou jonc quand elle subit une force tendant à écarter ses deux brins droits parallèles.

Quand l'organe de délestage se déplace vers l'élément de réaction par rapport à l'organe d'assistance, l'agrafe, et donc les moyens mobiles de l'organe de délestage, sont arrêtés par le plan de butée de vitesse.

Le brin traversant alors les moyens mobiles vient alors en contact avec la partie en pente du moyen rigide qui continue à avancer vers l'élément de réaction.

Le moyen rigide exerce donc une force sur ce brin dont la composante radiale tend à écarter ce brin de l'autre.

Quand le freinage d'urgence finalise, l'élasticité de l'agrafe fait que cette dernière exerce sur le moyen rigide une force de rappel tendant à lui faire reprendre sa position de repos.

On peut remarquer que le moyen rigide de ce mode de réalisation peut être le moyen de distribution assurant l'ouverture du clapet interne du servofrein qui déclenche l'entrée d'air dans la chambre arrière du servofrein et donc la force d'assistance de ce dernier.

Dans une réalisation, une face de sortie de l'élément de réaction, opposée selon l'axe à sa face d'entrée, exerçant une force de sortie sur une base d'un organe de sortie, l'organe de sortie comprend des moyens de prolongation qui ;
- sont fixés à cette base de l'organe de sortie,
- sont orientés vers l'organe de délestage en traversant l'élément de réaction,
- dépassent de la face d'entrée de l'élément de réaction,
la butée de vitesse étant comprise sur la partie des moyens de prolongation qui, quand le servofrein ne subit aucune force de commande, est entre la face d'entrée de l'élément de réaction et le côté de sortie en vis-à-vis de l'organe de délestage.

Ce mode de réalisation permet de réaliser la butée de vitesse sans avoir à usiner l'organe d'assistance, ce qui simplifie avantageusement la fabrication d'un servofrein conforme à l'invention.

En effet, la butée de vitesse est sur les moyens de prolongation qui peuvent être facilement réalisés par un élément cylindrique serti, collé, encliqueté ou vissé à la base de l'organe de sortie coopérant avec l'élément de réaction.

Les moyens de prolongation faisant partie de l'organe de sortie, la butée de vitesse est alors solidaire de cet organe de sortie.

La butée de freinage disposée sur les moyens de prolongation entre les cotes axiales du côté de sortie de l'organe de délestage au repos et de la face d'entrée de l'élément de réaction au repos, empêche les moyens mobiles de venir en contact avec l'élément de réaction lors d'un freinage à haute vitesse de commande.

Si le servofrein comprend une butée d'intensité, cette dernière peut être notamment solidaire de l'organe d'assistance ou des moyens de prolongation de l'organe de sortie.

Selon une réalisation, les moyens mobiles évidés en leur centre coulissent autour des moyens de prolongation.

Les moyens mobiles sont donc guidés avantageusement par les moyens de prolongation : il n'est pas nécessaire, grâce à cette invention d'usiner des cannelures ou des rainures à l'intérieur de l'organe d'assistance.

Les moyens mobiles peuvent se déplacer axialement avec le reste de l'organe de délestage ou/et par rapport à l'organe de délestage.

Dans un réalisation, les moyens de prolongation comprennent une saillie cylindrique creuse de la base de l'organe de sortie, la saillie cylindrique creuse étant coaxiale avec l'axe, traversant l'élément de réaction et logeant en partie un élément cylindrique fixé à la base de l'organe de sortie, élément cylindrique sur lequel coulissent les moyens mobiles de l'organe de délestage, la saillie cylindrique creuse ayant une longueur telle que, au repos du servofrein, l'extrémité libre de cette saillie cylindrique creuse soit comprise entre la face d'entrée de l'élément de réaction et les moyens mobiles, l'extrémité libre étant la butée de vitesse.

Ainsi la différence d'épaisseur entre la saillie et l'élément cylindrique est suffisante pour que les moyens mobiles puissent coulisser sur l'élément cylindrique mais soient arrêtés dans leur course vers l'élément de réaction, lors d'un freinage à haute vitesse de commande.

L'épaisseur radiale de la saillie cylindrique peut être faible par rapport à l'épaisseur de l'anneau compris dans les moyens mobiles pour ne pas interférer dans un freinage dont la vitesse d'application est inférieure au seuil de vitesse : en effet elle subit de la part des moyens mobiles lors d'un freinage d'urgence, un effort axial où son épaisseur intervient peu.

Cette réalisation de l'invention permet ainsi de réaliser une butée de freinage à haute vitesse d'application de façon précise, aisée et de faible coût car le positionnement axial de la butée dépend de la longueur de la saillie cylindrique creuse.

On peut remarquer que l'élément cylindrique de ce dernier mode de réalisation peut être le corps d'une vis.

La tête de la vis peut être alors une butée d'intensité d'un des modes de réalisation de l'invention.

Ainsi, on obtient sur les mêmes moyens de prolongation une butée d'intensité et une butée de vitesse.

Cette invention concerne aussi un organe d'assistance d'un servofrein d'assistance au freinage, coulissant selon un axe du servofrein et transmettant à une face d'entrée, perpendiculaire à l'axe, d'un élément de réaction élastique une force d'assistance générée par le servofrein quand ce dernier est soumis à une force de commande appliquée selon l'axe à un côté d'entrée d'un organe de délestage coulissant dans un conduit axial interne de l'organe d'assistance, le côté opposé de sortie de l'organe de délestage exerçant à son tour la force de commande sur la face d'entrée de l'élément de réaction, le côté de sortie de l'organe de délestage comprenant des moyens mobiles axialement par rapport au reste de l'organe de délestage.

Selon cette invention, un tel organe d'assistance est caractérisé en ce que l'organe d'assistance comprend une butée de vitesse pour, par rapport à l'organe d'assistance, immobiliser axialement les moyens mobiles et éviter leur contact avec l'élément de réaction quand l'organe de délestage est déplacé dans le conduit vers l'élément de réaction afin de diminuer la surface du côté de sortie venant au contact de l'élément de réaction et transmettant à ce dernier la force de commande.

Différents modes de réalisation d'un organe d'assistance conforme à l'invention sont possibles et notamment celles où l'organe d'assistance est compris dans un servofrein conforme à l'un des modes de réalisation de l'invention décrites précédemment et où la butée de vitesse est associée à l'organe d'assistance.

L'invention concerne aussi un organe de sortie d'un servofrein ayant un axe, le servofrein commandé par une force de commande générant une force d'assistance et comprenant un élément de réaction élastique présentant une face d'entrée perpendiculaire à l'axe et une face de sortie opposée axialement, l'élément de réaction étant soumis sur sa face d'entrée à :
- la force de commande exercée par une surface de contact d'un côté de sortie en vis-à-vis axial d'un organe de délestage qui coulisse dans un conduit axial d'un organe d'assistance du servofrein,
- la force d'assistance exercée par l'organe de d'assistance ,
l'élément de réaction exerçant sur sa face de sortie, une force de sortie sur une base d'un organe de sortie, le côté de sortie de l'organe de délestage comprenant des moyens mobiles axialement.

Selon cette invention, un tel organe de sortie est caractérisé en ce que la base de l'organe de sortie comprend des moyens de prolongation traversant l'élément de réaction et présentant une butée de vitesse entre l'élément de réaction et les moyens mobiles pour, lorsque l'organe de délestage est déplacé jusqu'à la butée de vitesse dans le conduit vers l'élément de réaction par rapport à l'organe d'assistance, arrêter la course des moyens mobiles vers la face d'entrée de l'élément de réaction.

Différents modes de réalisation d'un organe de sortie conforme à l'invention sont possibles, notamment ceux correspondant à des modes de réalisation d'un servofrein conforme à l'invention précédemment décrits qui contiennent un organe de sortie comprenant des moyens de prolongation.

D'autres caractéristiques et avantages de l'invention apparaîtront dans la description ci-dessous, à titre non limitatif, en référence aux figures ci-jointes sur lesquelles :
- Les figures 1a et 1b, déjà décrites ci-dessus, représentent schématiquement et respectivement un jeu de forces agissant sur un servofrein connu et la coopération d'éléments matériels propres à un servofrein connu exerçant ou subissant ces forces,
- La figure 2 représente une vue schématique en coupe d'une première réalisation de l'invention,
- La figure 3 représente une vue schématique en coupe d'une deuxième réalisation de l'invention,
- Les figures 4a, 4b et 4c représentent trois vues schématiques en coupe d'une partie d'un servofrein concernée par l'invention dans une troisième réalisation de l'invention dans trois états différents en fonction de paramètres de commande du servofrein,
- Les figures 5a, 5b et 5c représentent trois vues schématiques en coupe d'une partie d'un servofrein concernée par l'invention dans une quatrième réalisation de l'invention dans trois états différents en fonction de paramètres de commande du servofrein,
- La figure 5d représente une vue schématique d'une agrafe utilisée dans la quatrième réalisation,
- Les figures 6a, 6b, 6c et 6d représentent trois vues schématiques en coupe d'une partie d'un servofrein concernée par l'invention dans une cinquième réalisation de l'invention dans trois états différents en fonction de paramètres de commande du servofrein.

Les mêmes signes de références dans différentes figures font référence aux mêmes objets.

Deux sortes de modes de réalisation sont décris, selon que la butée de vitesse propre à l'invention soit solidaire de l'organe d'assistance ou soit solidaire de l'organe de sortie du servofrein grâce à des moyens de prolongation propre à l'invention.

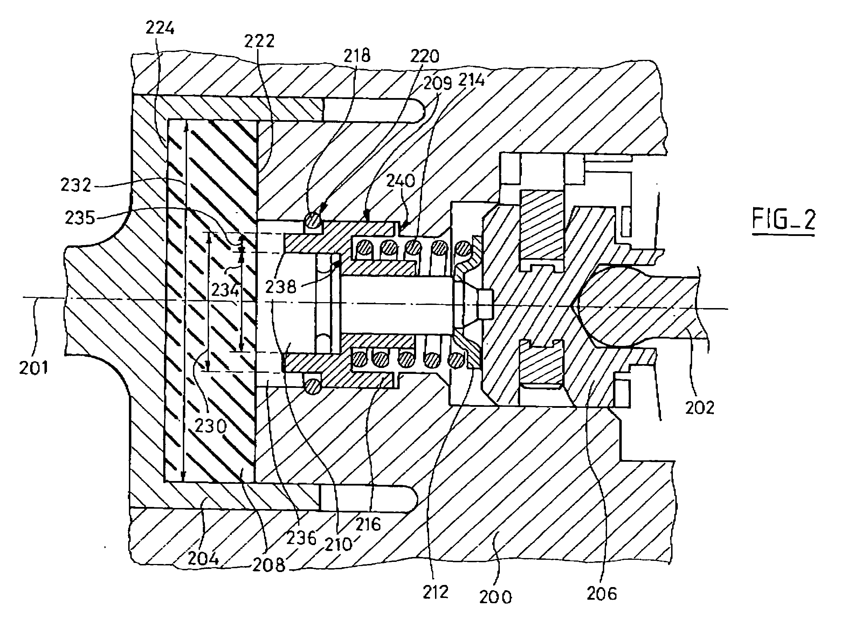

La figure 2 représente une vue schématique en coupe de la partie d'un servofrein conforme à l'invention concernée par cette invention selon une première réalisation de l'invention.

D'abord, le fonctionnement général d'un servofrein est décrit à partir de la figure 2, cette description du fonctionnement général étant applicable à toutes les réalisations décrites ci-dessous.

L'organe d'assistance du servofrein est un piston 200 coulissant selon l'axe 201 qui est l'axe du servofrein le comprenant.

Une jupe non représentée est sertie sur ce piston 200.

Cette jupe sépare le boîtier du servofrein en une chambre avant et une chambre arrière, la chambre avant étant maintenue en dépression de façon permanente.

La chambre avant est reliée à la chambre arrière quand le servofrein est au repos, par une voie, acheminant la dépression, d'une valve à trois voies comprise dans le piston 200.

La fermeture de cette voie acheminant la dépression et l'ouverture d'une autre voie amenant de l'air à la pression atmosphérique dans la chambre arrière est réalisée par le mouvement d'un moyen de distribution 206 quand ce dernier est poussé par un organe d'entrée qui est dans cette réalisation une tige de commande 202.

Cette tige de commande 202 permet d'exercer une force de commande, lors d'un freinage, sur l'entrée du servofrein.

Cette force de commande est ensuite transmise du moyen de distribution 206 à la base 212 d'un organe de délestage 209, formant le côté d'entrée de cet organe de délestage 209.

Le côté opposé de cet organe de délestage est le côté de sortie de cet organe de délestage 209.

Le servofrein comprend un organe de sortie qui est dans cette réalisation une tige de poussée 204 et qui coopère avec un maître-cylindre non représenté pour notamment accroître la pression d'un liquide de frein.

La tige de poussée 204 porte, dans son extrémité représentée, orientée vers la tige de commande 202 et formant coupelle, un élément de réaction 208 élastique, qui est dans cette réalisation un disque 208 de réaction en caoutchouc, susceptible, lors d'un freinage de coopérer avec le côté de sortie, de l'organe de délestage 209.

Grâce à l'élasticité du disque de réaction 208, ce dernier a un comportement similaire à celui d'un liquide incompressible quand il est soumis à des forces : sa pression interne augmente mais son volume global, même si il se déforme, reste constant.

Conformément à l'invention, le disque de réaction 208 a deux faces perpendiculaires à l'axe 201 du servofrein : une face d'entrée 222 orientée vers l'organe de délestage et une face de sortie 224, orientée vers la tige de poussée 204.

Deux sortes de freinage sont alors envisageables, selon que ce soit l'organe de délestage 209 qui vienne au contact du disque de réaction 208 ou le disque de réaction 208 qui vienne au contact, par déformation, de l'organe de délestage (ce qui est équivalent à l'existence ou non d'un certain mouvement relatif de l'organe de délestage 209 par rapport au piston 200) :
- Freinage à vitesse d'application lente : un freinage est de ce type si la vitesse d'application de la force de commande permet au servofrein, soumis à une constante de temps de réaction, de générer la force d'assistance en même temps que l'organe de délestage 209 est poussé vers le disque de réaction 208, alors le piston 200 et l'organe de délestage avancent ensemble vers le disque de réaction 208,
- Freinage à haute vitesse d'application ou freinage d'urgence : un freinage est de ce type si la vitesse d'application de la force de commande est telle (temps d'application de la force de commande inférieur à la constante de réaction du servofrein) que le servofrein n'a pas le temps de générer la force d'assistance et de déformer le disque de réaction 208 avant que l'organe de délestage 209, poussé par le moyen de distribution 206, ne viennent directement au contact du disque de réaction 208.

En effet, la constante de réaction du servofrein est le temps nécessaire pour déformer le disque de réaction 208 à partir du moment où l'on applique la force de commande :
- Suite à l'application de la force de commande, l'ouverture d'un clapet propre à la valve à trois voies (qui s'ouvre par le mouvement axial du moyen de distribution 206), fait rentrer l'air à la pression atmosphérique dans la chambre arrière et ferme la voie reliant la chambre arrière à la chambre avant,
- La différence de pression entre la chambre avant et la chambre arrière crée alors une force d'assistance s'appliquant sur la jupe séparant les deux chambres et donc sur le piston 200,
- Le piston 200 applique alors cette force d'assistance sur une surface annulaire du disque de réaction 208,
- Enfin, le disque de réaction 208 se déforme alors en s'amincissant sur sa portion annulaire où appuie le piston 200 et en envahissant le conduit 236 où coulisse l'organe de délestage 209.

Le temps qui s'écoule entre l'application de la force de commande et la déformation effective de le disque de réaction 208 est la constante de temps de réaction du servofrein.

Par ailleurs, une force de sortie assistée, issue de la transmission de la force d'assistance et la force de commande par le disque de réaction 208, est alors exercée sur la tige de poussée 222, puis transmise par cette dernière à un maître-cylindre non représenté.

Une force de réaction est exercée en retour du maître-cylindre sur la face de sortie 224 du disque de réaction 208 du servofrein à travers la tige de poussée 204 : elle a un sens opposé à celui de la force de sortie.

Le disque de réaction 208 transmet une partie de la force de réaction, dénommée force de réaction absorbée, au piston 200 du servofrein.

L'organe de délestage transmet une autre partie de la force de réaction, dénommée force de résistance, au moyen de distribution 206,

La force de résistance transmise au moyen de distribution est responsable notamment de la résistance ressentie par le conducteur qui appuie sur une pédale de frein directement reliée à la tige de commande lors d'un freinage commande par le pied de ce conducteur.

Sur l'exemple de cette première réalisation, le fonctionnement général d'un servofrein a été décrit ci-dessus et reste valable (avec les adaptations indiquées au niveau de la description de chaque réalisation, comme par exemple l'inclusion du moyen de distribution dans l'organe de délestage) pour les autres réalisations.

Plus spécifiquement, dans cette première réalisation, l'organe de délestage comprend:
- une partie incompressible, le disque rigide 210 qui comprend le côté d'entrée, la base 212, de l'organe de délestage 209, qui coopère avec le moyen de distribution 206,
- des moyens mobiles, qui comprennent dans cette réalisation un élément annulaire 216,
- des moyens élastiques pré-contraints disposés entre la base 212 et les moyens mobiles de sorte à exercer une force de rappel sur les moyens mobiles 216 tendant à les maintenir contre l'épaulement 238 de l'élément rigide 210.

Le côté de sortie de l'organe de délestage, côté étant en vis-à vis du disque de réaction 208 s'étend alors sur une surface 230.

Quand on exerce un freinage à vitesse d'application lente, le servofrein a le temps de réagir à la force de commande et, en même temps que la tige de commande 202 pousse sur le moyen de distribution 206 et sur l'élément rigide 210, le piston 200 avance vers le disque de réaction 208 en exerçant une pression sur une surface annulaire de sa face d'entrée 222.

Le disque de réaction se déforme élastiquement, vient envahir le conduit 236 et vient au contact du côté de sortie de l'organe de délestage 209, composé de la surface 234 de contact de l'élément rigide 210 et de la surface de contact annulaire 235 des moyens mobiles 216.

Au delà d'un certain seuil d'intensité force de commande, dénommé seuil d'intensité, la pression qu'exerce le disque de réaction 208 sur la surface annulaire 235 des moyens mobiles 216 dépasse la charge du ressort 214 et les moyens mobiles 216 coulissent sur l'élément rigide 210 pour venir s'appuyer sur l'épaulement 240 de la paroi interne du conduit 236 du piston 200, qui est la butée d'intensité d'un des modes de réalisation de l'invention pour cette première réalisation de l'invention.

Ainsi, au delà du seuil d'intensité, le piston 200 absorbe la partie de la force de réaction remontant par la surface annulaire 235 des moyens mobiles 216, cette partie de la force de réaction ne faisant donc plus partie de la force de résistance.

Le rapport d'assistance au freinage est égal au rapport de la surface 232 de la face de sortie 224 du disque de réaction 208, par la surface d'application de la force de commande sur le disque de réaction 208.

Cette surface d'application de la force de commande sur le disque de réaction 208 est égal, en dessous du seuil, à la surface 230 et, au delà du seuil, à la surface 234 sans la surface 235.

Le rapport d'assistance est donc augmenté quand la force de commande dépasse le seuil d'intensité.

Quand on exerce un freinage à haute vitesse d'application, un anneau fendu 218 monté dans une gorge 220 circulaire radiale usinée dans le conduit 236 limite la course des moyens mobiles 216 vers le disque de réaction 208 et empêche que la surface 235 vienne au contact du disque de réaction 208. Cet anneau fendu 218 est la butée de vitesse de l'invention.

Cette butée de vitesse peut être dans une autre réalisation un circlips ou un jonc métallique disposé dans la gorge 220. La section de cette butée de vitesse peut être selon la réalisation notamment circulaire, carrée ou rectangulaire.

Ainsi lors d'un freinage à haute vitesse d'application, le rapport d'assistance est augmenté en diminuant la surface de contact entre l'organe de délestage 209 et le disque de réaction 208, la surface 232 de la face de sortie 224 du disque de réaction 208 restant constante. Le conducteur est donc aidé pour un freinage d'urgence.

On peut remarquer qu'en général un freinage d'urgence n'est pas dosé et a une intensité importante, ce qui facilite la compression du ressort 214 pour ce type de freinage.

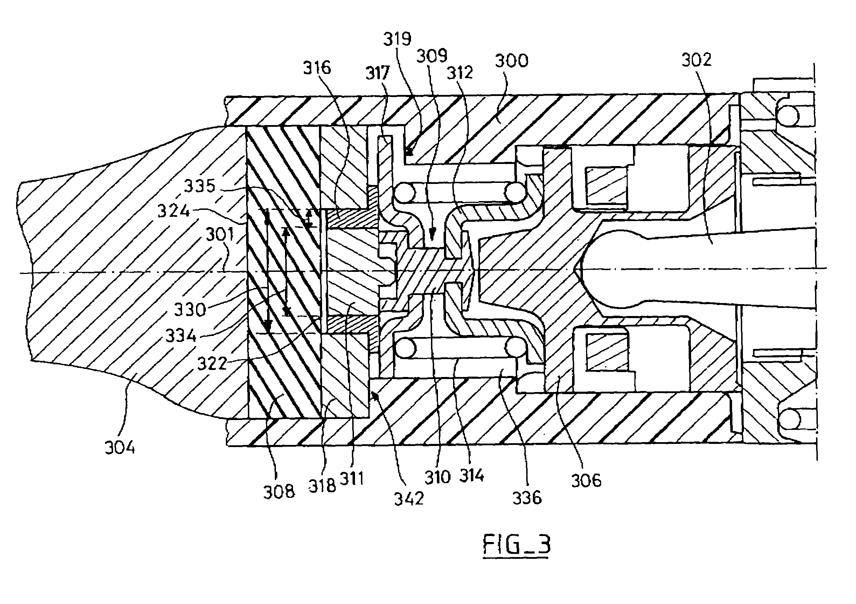

La figure 3 représente une autre réalisation de l'invention.

Un organe d'entrée qui est dans cette réalisation une tige de commande 302 transmet une force de commande, lors d'un freinage sur un moyen de distribution 306 logé à l'intérieur d'un organe d'assistance, comprenant un piston 300 d'axe 301.

Ce dernier en plus d'ouvrir le clapet propre à la valve à trois voies décrit ci-dessus, exerce cette force de commande sur un côté d'entrée d'un organe de délestage 309.

Cet organe de délestage 309 comprend :
- un élément incompressible et rigide axialement incluant une base 312 formant le côté d'entrée de l'organe de délestage, un corps 310 et un élément cylindrique de contact 311,
- des moyens mobiles conformes à l'invention coulissant autour de l'élément incompressible, ces moyens mobiles comprenant un anneau mobile 317 pouvant coulisser autour du corps 310 et une bague 316 pouvant coulisser autour de l'élément cylindrique de contact 311,
- des moyens élastiques comprenant un ressort 314.

L'organe de délestage 309 et le moyen de distribution 306 coulissent dans un conduit 336.

Quand la force de commande est appliquée sur la base 312, le corps 310 de l'organe de délestage pousse l'élément cylindrique de contact 311 qui rentre alors en contact avec un élément de réaction, constitué d'un disque de réaction 308, ayant une face d'entrée 322 tournée vers l'organe de délestage 309 et une face de sortie 324 tournée vers un organe de sortie, comprenant une tige de poussée 304, ces deux faces étant perpendiculaires à l'axe 301.

Ce disque de réaction 308 est logé dans un logement délimité :
- radialement par le corps du piston 300 et
- axialement, d'un côté par la tige de poussée 304 qui reçoit une force de sortie de la face de sortie 324 du disque de réaction 308 et de l'autre côté par un anneau 318 immobilisé axialement par le disque de réaction 308 sur lequel il s'appuie d'un côté et par un épaulement 342 de la paroi interne du conduit 336 du piston 300 qui l'immobilise axialement de l'autre côté.

Cet anneau 318 est la butée de vitesse de l'invention.

L'élément cylindrique de contact 311 est entouré de la bague 316 dont une partie peut coulisser entre l'élément cylindrique de contact 311 et l'anneau 318, l'autre partie ayant un diamètre extérieur plus important venant en butée axialement contre cet anneau 318.

Nous décrivons par la suite ce qu'il advient dans une telle réalisation selon le type de freinage appliqué.

Quand on exerce un freinage à vitesse d'application lente défini ci-dessus, l'entrée d'air dans la chambre arrière du servofrein permet au piston 300 d'avancer axialement, en parallèle avec l'organe de délestage 309, sur le disque de réaction 308 afin de lui appliquer la force d'assistance sur une surface égale à la surface de contact entre l'anneau 318 et le disque de réaction 308.

Ainsi, le disque de réaction 308 se déforme élastiquement, vient envahir l'évidemment central de l'anneau 318 et vient donc au contact de l'élément cylindrique de contact 311 et de la bague 316.

Au delà d'une certain seuil d'intensité de la force de commande, dénommé seuil d'intensité, la pression qu'exerce le disque de réaction 308 sur la bague 316 dépasse la charge du ressort 314, ce dernier est donc comprimé et les moyens mobiles de l'organe de délestage, c'est à dire dans cette réalisation la bague 316 et l'anneau mobile 317 coulissent sur l'élément rigide (respectivement sur l'élément cylindrique de contact 311 et sur le corps 310), jusqu'à ce que l'anneau mobile 317 vienne en butée sur un épaulement 319 du conduit 336.

Cet épaulement 319 est donc bien la butée d'intensité d'un des modes de réalisation de l'invention.

Ainsi, au delà du seuil d'intensité, le piston 300 absorbe la partie de la force de réaction remontant par la bague 316 des moyens mobiles, cette partie de la force de réaction ne faisant donc plus partie de la force de résistance.

Le rapport d'assistance au freinage étant égal au rapport de la surface de la face de sortie 324 du disque de réaction 308, par la surface d'application de la force de commande sur le disque de réaction 308 (qui est égale, en dessous du seuil d'intensité et dans le cadre d'un freinage du type décrit ici, à la surface 330 et au-delà du seuil d'intensité à la surface 334) est donc augmenté quand l'intensité de la force de freinage dépasse le seuil d'intensité.

Quand on exerce un freinage à haute vitesse d'application, l'anneau 318 limite la course des moyens mobiles (notamment de la bague 316) vers le disque de réaction 308 et empêche que la bague 316 vienne au contact du disque de réaction 308.

Cet anneau 318 constitue donc bien la butée de vitesse de l'invention.

Ainsi lors d'un freinage à haute vitesse d'application, le rapport d'assistance est augmenté en diminuant la surface de contact entre l'organe de délestage 309 et le disque de réaction 308, la surface 324 de la face de sortie de l'élément de réaction 208 restant constante.

Le conducteur est donc aidé pour un freinage d'urgence.

On peut remarquer qu'en général un freinage d'urgence n'est pas dosé et a une intensité importante, ce qui facilite la compression du ressort 314 pour ce type de freinage.

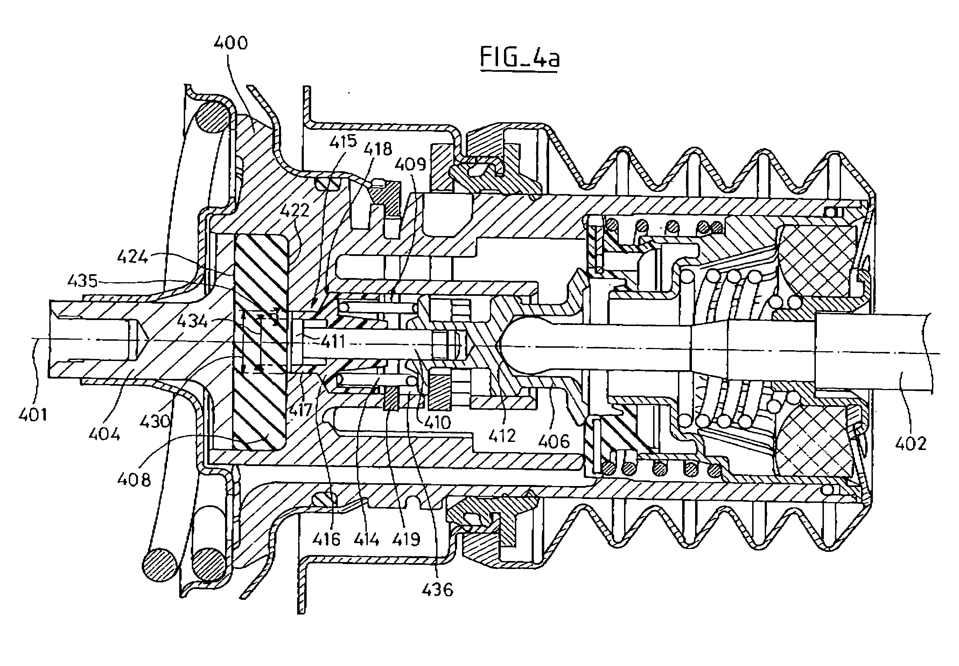

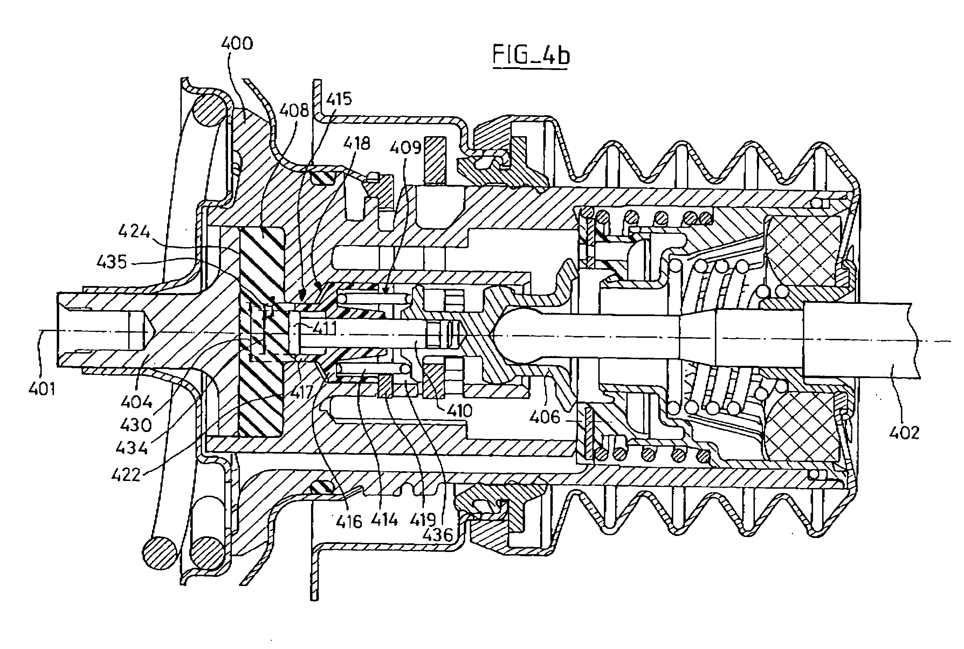

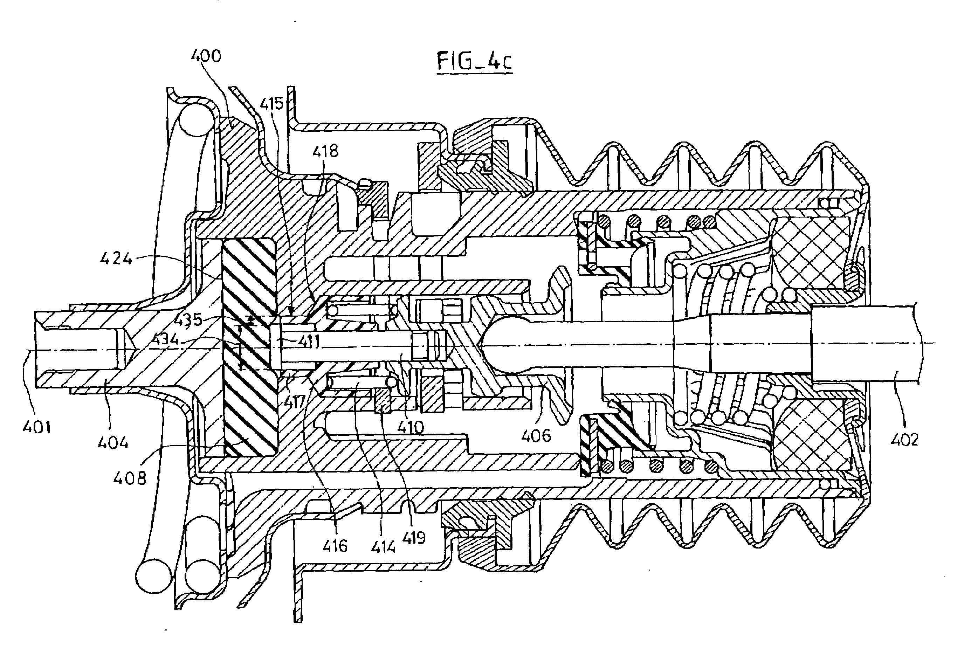

Les figures 4a, 4b et 4c représentent une autre réalisation de l'invention au repos (4a) et selon différents types de freinage appliqués (4b et 4c).

Un organe d'entrée qui est dans cette réalisation une tige de commande 402, transmet une force de commande, lors d'un freinage, sur un moyen de distribution 406 logé à l'intérieur d'un organe d'assistance, comprenant un piston 400 d'axe 401.

Dans cette réalisation, le moyen de distribution 406 dont une des fonctions est de notamment d'ouvrir le clapet propre à la valve à trois voies décrit ci-dessus, est compris dans un organe de délestage 409 propre à cette réalisation de l'invention.

La base 412 de ce moyen de distribution, qui est en contact avec la tige de commande 402 est donc le côté d'entrée de l'organe de délestage 409.

Cet organe de délestage 409 comprend :
- un élément incompressible et rigide axialement incluant le moyen de distribution 406 et une vis 410 vissée dans le moyen de distribution 406, cette vis comprenant une tête de vis 411,
- des moyens mobiles conformes à l'invention coulissant autour de l'élément incompressible, ces moyens mobiles comprenant un anneau mobile 416 qui coulisse autour de la vis 410,
- des moyens élastiques comprenant un ressort 414.

L'organe de délestage 409 comprenant le moyen de distribution 406 coulisse dans un conduit 436.

Quand la force de commande est appliquée sur la base 412, le moyen de distribution 406 de l'organe de délestage 409 pousse la vis 410 qui rentre alors en contact avec un élément de réaction, constitué d'un disque de réaction 408, ayant une face d'entrée 422 tournée vers l'organe de délestage 409 et une face de sortie 424 tournée vers un organe de sortie comprenant une tige de poussée 404, ces deux faces 422 et 424 étant perpendiculaires à l'axe 401.

Ce disque de réaction 408 est logé dans un logement délimité :
- radialement par le corps du piston 400 et
- axialement, d'un côté par l'organe de sortie 404 qui reçoit une force de sortie de la face de sortie 424 du disque de réaction 408 et de l'autre côté par une surface annulaire du piston 400.

Le conduit 436 présente un rétrécissement 415, partie du conduit débouchant sur le disque de réaction 408 la plus étroite. La partie en pente 418 du conduit 436 qui relie le rétrécissement 415 à la partie plus large de diamètre constant du conduit 436 est la butée de vitesse de l'invention.

L'anneau mobile 416 épouse la partie en pente 418 et se prolonge annulairement entre le bord interne du rétrécissement 415 et la tête 411 de vis, ce prolongement 417 pouvant coulisser entre la tête 411 de vis et le bord interne du conduit 436.

La surface résultant de la projection axiale de ce prolongement annulaire 417 sur le disque de réaction 408 est la surface annulaire 435.

La surface résultant de la projection axiale de la tête 411 de vis 410 sur le disque de réaction 408 est la surface circulaire 434.

La surface résultant de la projection axiale du prolongement annulaire 417 et de la tête 411 de vis 410 sur le disque de réaction 408 est la surface circulaire 430.

Nous décrivons par la suite ce qu'il advient dans une telle réalisation selon le type de freinage appliqué.

Au repos (figure 4a), il existe un espace entre d'une part, le prolongement 417 de l'anneau mobile 416 et la tête 411 de vis 410, et le disque de réaction 408 d'autre part.

L'anneau mobile 416 est maintenu en butée contre la partie en pente 418 par la charge du ressort 414 qui est pré-contraint.

La figure 4b présente un des cas où un freinage à vitesse d'application lente défini ci-dessus est appliqué au servofrein.

L'entrée d'air dans la chambre arrière permet au piston 400 d'avancer axialement, en parallèle avec l'organe de délestage 409, sur le disque de réaction 408 afin de lui appliquer la force d'assistance sur une surface égale à la surface annulaire de contact axial entre le piston 400 et le disque de réaction 408.

Ainsi, le disque de réaction 408 se déforme élastiquement, envahit l'entrée du rétrécissement 415 du conduit 436 et vient donc au contact de la tête 411 de vis 410 et du prolongement 417 de l'anneau mobile 416.

Au delà d'une certain seuil d'intensité de la force de commande (cas de la figure 4b), dénommé seuil d'intensité, la pression qu'exerce le disque de réaction 408 sur le prolongement 417 dépasse la charge du ressort 414, ce dernier est donc comprimé et les moyens mobiles de l'organe de délestage 409, c'est à dire dans cette réalisation notamment l'anneau mobile 416, coulissent sur la vis 410, jusqu'à ce que l'anneau mobile 416 vienne en butée sur un épaulement 419 du conduit 436.

Cet épaulement 419 est donc la butée d'intensité d'un des modes de réalisation de l'invention.

Ainsi, au delà du seuil d'intensité, le piston 400 absorbe la partie de la force de réaction remontant par l'anneau mobile 416, cette partie de la force de réaction ne faisant donc plus partie de la force de résistance.

Le rapport d'assistance au freinage étant égal au rapport de la surface 424 de la face de sortie du disque de réaction 408, par la surface d'application de la force de commande sur le disque de réaction 408 (qui est égal, en dessous du seuil d'intensité et dans le cadre d'un freinage à vitesse d'application lente, à la surface 430 et, au-delà du seuil d'intensité, à la surface 434) est donc augmenté.

La figure 4c présente un des cas où un freinage à haute vitesse d'application défini ci-dessus est appliqué au servofrein.

Quand on exerce un freinage à haute vitesse d'application, l'organe de délestage 409 est poussé vers le disque de réaction 408 avant que le piston 400 n'ait eu le temps de réagir et de comprimer le disque de réaction 408.

La partie en pente 418 du conduit 436 limite la course des moyens mobiles (notamment de l'anneau mobile 416) vers le disque de réaction 408 et empêche que le prolongement 417 de l'anneau mobile 416 vienne au contact du disque de réaction 408.

Cet partie en pente 418 est donc bien la butée de vitesse de l'invention.

Ainsi lors d'un freinage à haute vitesse d'application, le rapport d'assistance est augmenté en diminuant la surface de contact entre l'organe de délestage 409 et le disque de réaction 408 (qui est égale, pour un freinage à haute vitesse d'application, à la surface 434 sans la surface 435), la surface 424 de la face de sortie du disque de réaction 408 en contact avec la tige de poussée 404 restant constante.

Le conducteur est donc aidé pour un freinage d'urgence.

On peut remarquer qu'en général un freinage d'urgence n'est pas dosé et a une intensité importante, ce qui facilite la compression du ressort 414 pour ce type de freinage.

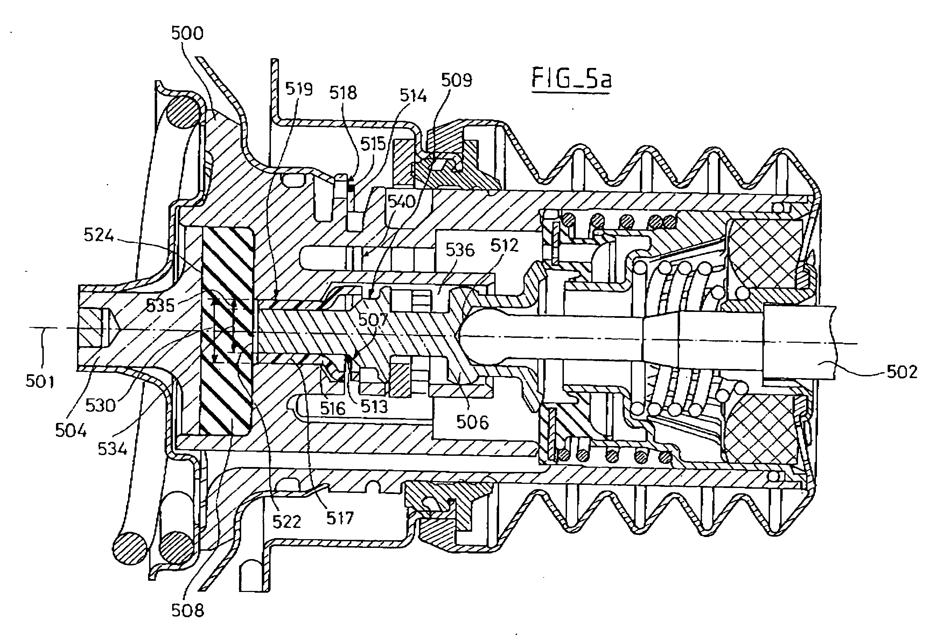

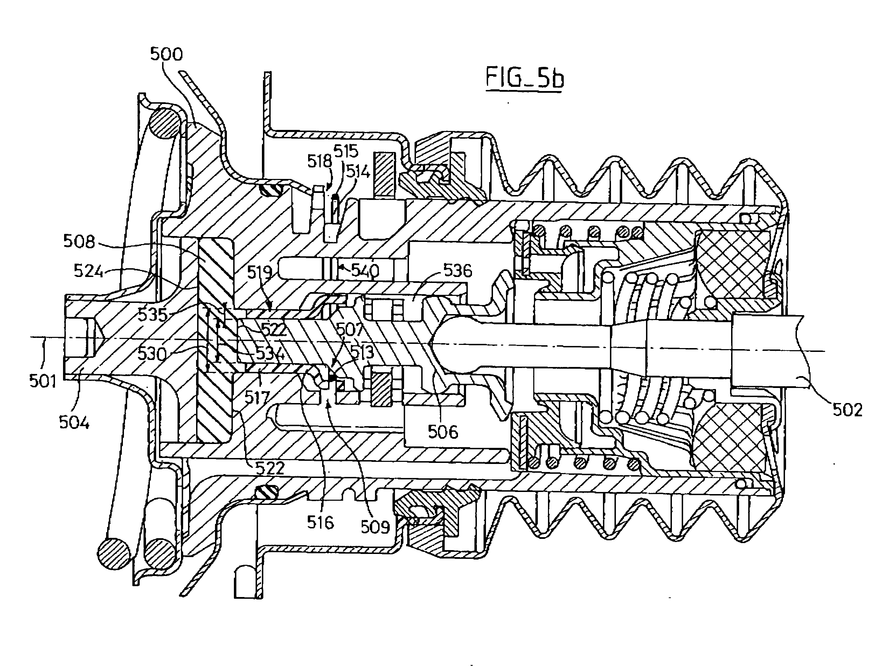

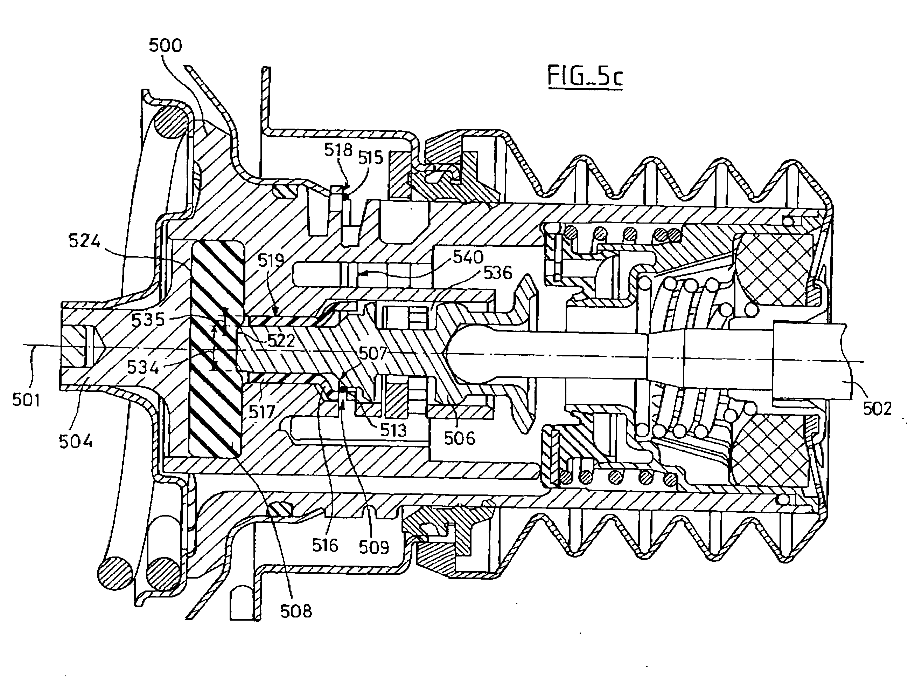

Les figures 5a, 5b et 5c représentent une autre réalisation de l'invention au repos (5a) et selon le type de freinage appliqué (5b et 5c). Pour ces figures, la partie du dessin qui est au dessus d'un axe 501 est une section axiale du servofrein tournée de 90% par rapport à la partie de la figure qui est en dessous de l'axe 501

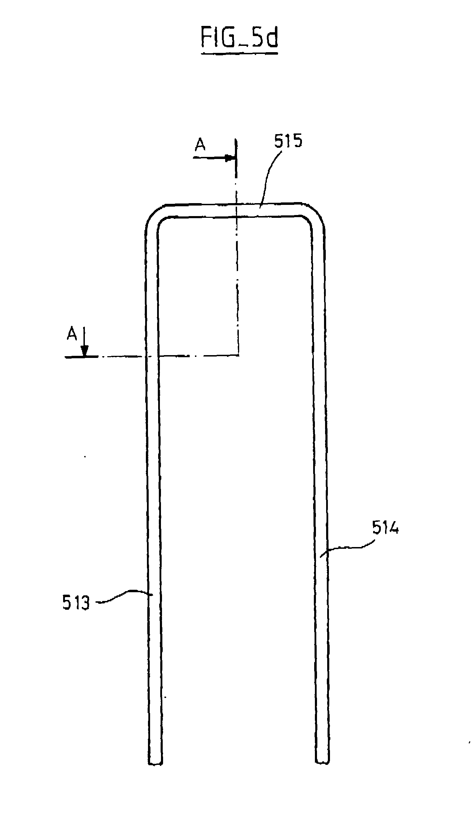

La figure 5d représente la représentation schématique d'une agrafe utilisée dans cette réalisation et donne le sens des sections des figures 5a, 5b et 5c.

Un organe d'entrée qui est dans cette réalisation une tige de commande 502, transmet une force de commande, lors d'un freinage, sur un moyen de distribution 506 logé à l'intérieur d'un organe d'assistance comprenant un piston 500 d'axe 501.

Dans cette réalisation, le moyen de distribution 506 (dont une des fonctions est de notamment d'ouvrir notamment une voie d'entrée d'air dans la chambre arrière du servofrein, cette voie étant propre à une valve à trois voies décrite ci-dessus) du servofrein est compris dans un organe de délestage 509 propre à cette réalisation de l'invention.

La base 512 de ce moyen de distribution, qui est en contact avec la tige de commande 502 forme le côté d'entrée de l'organe de délestage 509.

Quand la force de commande est appliquée sur la base 512 du moyen de distribution 506, ce dernier rentre alors en contact avec un élément de réaction, constitué d'un disque de réaction 508, ayant une face d'entrée 522 tournée vers l'organe de délestage 509 et une face de sortie 524 tournée vers un organe de sortie comprenant une tige de poussée 504, ces deux faces étant perpendiculaires à l'axe 501.

L'organe de délestage 509 comprend :
- un élément incompressible et rigide axialement qui est, dans cette réalisation, le moyen de distribution 506 lui-même,
- des moyens mobiles conformes à l'invention coulissant autour du moyen de distribution 506, ces moyens mobiles comprenant un anneau mobile 516 qui coulisse autour du moyen de distribution 506,
- des moyens élastiques comprenant une agrafe (513,514,515) représentée dans la figure 5d.

Cette agrafe (513,514,515) est comprise dans un plan perpendiculaire à l'axe 501.

Cette agrafe (513,514,515) comprend deux brins droits parallèles lorsqu'elle est au repos.

Ces brins 513 et 514 sont reliés entre eux par une partie 515 de l'agrafe (513,514,515).

Cette agrafe (513,514,515) est rentrée, lors du montage du piston 500, en force (les brins 513 et 514 s'écartant lors de ce montage) en traversant le piston 500.

L'agrafe (513,514,515) est donc montée précontrainte.

Une partie 513 de cette agrafe (513,514,515) traverse l'anneau mobile 516, et donc l'agrafe (513,514,515) se déplace avec cet anneau mobile 516 en translation axiale dans une fente limitée du côté le plus proche du disque de réaction 508 par un plan, dénommé plan de butée de vitesse 518 du piston 500.

Cette translation axiale de l'agrafe est limitée de l'autre côté par un autre plan, dénommé plan de butée d'intensité 540.

Le moyen de distribution 506 présente une forme conique sur une partie conique 507 qui peut coopérer avec la partie 513 de l'agrafe (513,514,515).

Le plan de butée de vitesse 518 est perpendiculaire à l'axe 501.

L'organe de délestage 509 comprenant le moyen de distribution 506, coulisse dans un conduit 536 axial interne au piston 500 et débouchant sur le disque de réaction 508.

La butée de vitesse de cette réalisation de l'invention est le plan de butée de vitesse 518 limitant la course en translation axiale vers l'élément de réaction 508 de l'agrafe (513,514,515)et de l'anneau mobile 516, quand l'organe de délestage 509 est déplacé dans le conduit 536 vers le disque de réaction 508 par rapport au piston 500.

Le disque de réaction 508 est logé dans un logement délimité:
- radialement par le corps du piston 500 et
- axialement, d'un côté par l'organe de sortie 504 qui reçoit une force de sortie de la face de sortie 524 du disque de réaction 508 et de l'autre côté par une surface annulaire du piston 500.

Le conduit 536 présente un rétrécissement 519, partie du conduit débouchant sur le disque de réaction 508 la plus étroite.

L'anneau mobile 516 a en partie une forme conique et se prolonge annulairement entre le bord interne du rétrécissement 519 et l'extrémité du moyen de distribution 506, ce prolongement 517 pouvant coulisser entre l'extrémité du moyen de distribution 506 et le bord interne du rétrécissement 519 du conduit 536.

La surface résultant de la projection axiale de ce prolongement annulaire 517 sur le disque de réaction 508 est la surface annulaire 535.

La surface résultant de la projection axiale de l'extrémité du moyen de distribution 506 sur le disque de réaction 508 est la surface circulaire 534.

La surface résultant de la projection axiale du prolongement annulaire 517 et de l'extrémité du moyen de distribution 506 sur le disque de réaction 508 est la surface circulaire 530.

Nous décrivons par la suite ce qu'il advient dans une telle réalisation selon le type de freinage appliqué.

Au repos (figure 5a), il existe un espace entre d'une part, l'extrémité du prolongement 517 de l'anneau mobile 516 et l'extrémité du moyen de distribution 506, qui sont alors contigus, et le disque de réaction 508 d'autre part.

L'agrafe (513,514,515) est immobilisée car premièrement elle ne peut se déplacer vers le disque de réaction 508 à cause du plan de butée de vitesse.

Deuxièmement, au repos du servofrein, la partie 513 de l'agrafe (513,514,515) traversant l'anneau mobile 516 est située sur le bord du moyen de distribution 506 juste à l'endroit où commence la partie conique 507 du moyen de distribution 506.

Sans subir de force, la partie 513 ne peut monter sur cette partie conique 507, car cela suppose d'augmenter l'écartement entre les deux brins 513 et 514 de l'agrafe (513,514,515), ce qui produit une force de rappel élastique faisant redescendre la partie 513 de l'agrafe (513,514,515).

L'agrafe (513,514,515) est donc bien immobilisée au repos du servofrein.

La figure 5b présente un des cas où un freinage à vitesse d'application lente défini ci-dessus est appliqué au servofrein.

L'entrée d'air dans la chambre arrière du servofrein permet au piston 500 d'avancer axialement, en parallèle avec l'organe de délestage 509, sur le disque de réaction 508 afin de lui appliquer la force d'assistance sur une surface égale à la surface annulaire de contact axial entre le piston 500 et le disque de réaction 508.

Ainsi, le disque de réaction 508 se déforme élastiquement, envahit l'entrée du rétrécissement 519 du conduit 536 et vient donc au contact de l'extrémité du moyen de distribution 506 et de l'extrémité du prolongement 517 de l'anneau mobile 516.

Au delà d'une certain seuil d'intensité de la force de commande (cas de la figure 5b), dénommé seuil d'intensité, la pression qu'exerce le disque de réaction 508 sur l'extrémité du prolongement 517 dépasse la force de rappel élastique contraire à l'écartement des brins 513 et 514 de l'agrafe (513,514,515) (valeur de pré-contrainte de l'agrafe (513,514,515)).

La partie 513 de l'agrafe (513,514,515) monte donc sur la partie conique 507 du moyen de distribution.

Les moyens mobiles de l'organe de délestage 509, c'est à dire dans cette réalisation notamment l'anneau mobile 516, coulissent sur le moyen de distribution 506, jusqu'à ce que l'agrafe (513,514,515) vienne en butée sur le plan 540 de butée d'intensité.

Ce plan 540 de butée d'intensité est donc la butée d'intensité d'un des modes de réalisation de l'invention.

Ainsi, au delà du seuil d'intensité, le piston 500 absorbe la partie de la force de réaction remontant par l'anneau mobile 516 et par l'agrafe (513,514,515), cette partie de la force de réaction ne faisant donc plus partie de la force de résistance.

Le rapport d'assistance au freinage étant égal au rapport de la surface 524 de la face de sortie du disque de réaction 508, par la surface d'application de la force de commande sur le disque de réaction 508 (qui est égal, en dessous du seuil d'intensité et dans le cadre d'un freinage à vitesse d'application lente, à la surface 530 et, au-delà du seuil d'intensité, à la surface 534) est donc augmenté.

La figure 5c présente un des cas où un freinage à haute vitesse d'application défini ci-haut est appliqué au servofrein.

Quand on exerce un freinage à haute vitesse d'application, l'organe de délestage 509 est poussé vers le disque de réaction 508 avant que le piston 500 n'ait eu le temps de réagir et de comprimer le disque de réaction 508.

L'agrafe (513,514,515) (et notamment son brin 514) vient en butée contre le plan de butée de vitesse 518. L'anneau mobile 516 est immobilisé axialement tandis que le moyen de distribution 506 continue sa course vers le disque de réaction 508.

Le plan de butée de vitesse 518 empêche donc que l'extrémité du prolongement 517 de l'anneau mobile 516 vienne au contact du disque de réaction 508.

Le plan de butée de vitesse 518 est donc bien la butée de vitesse de l'invention.

La partie 513 de l'agrafe (513,514,515) coopère alors avec la partie conique 507 du moyen de distribution, la pente de cette partie conique ouvre l'agrafe (513,514,515) si la force de commande est supérieure à la force élastique de rappel de l'agrafe opposée à son écartement, ce qui est pratiquement toujours le cas car un freinage d'urgence n'est pas dosé et a une intensité importante.

Ainsi lors d'un freinage à haute vitesse d'application, le rapport d'assistance est augmenté en diminuant la surface de contact entre l'organe de délestage 509 et le disque de réaction 508 (qui est égale, pour un freinage à haute vitesse d'application, à la surface 534 sans la surface 535), la surface 524 de la face de sortie du disque de réaction 508 en contact avec la tige de poussée 504 restant constante.

Le conducteur est donc aidé pour un freinage d'urgence dans cette réalisation.

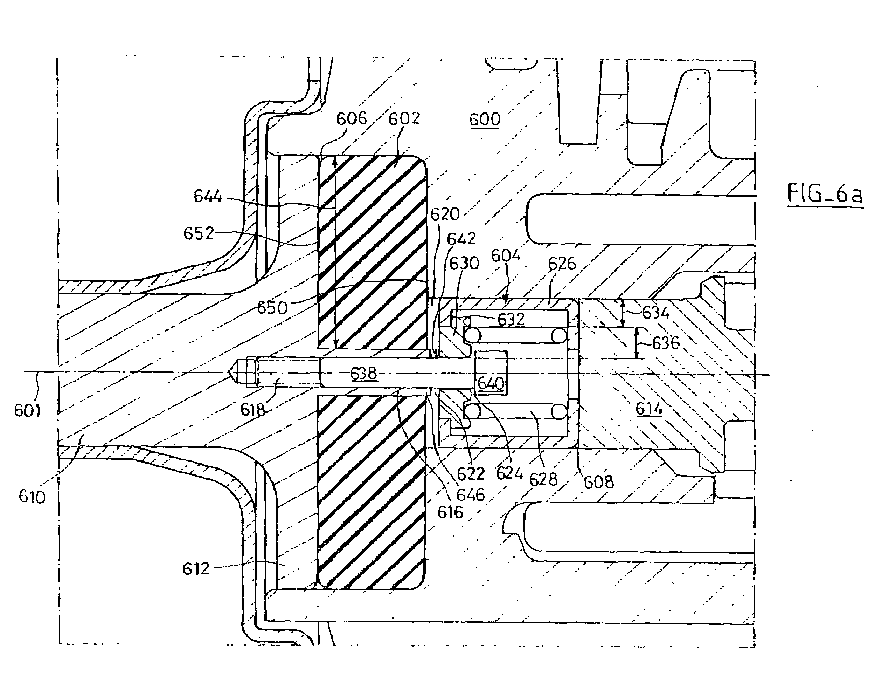

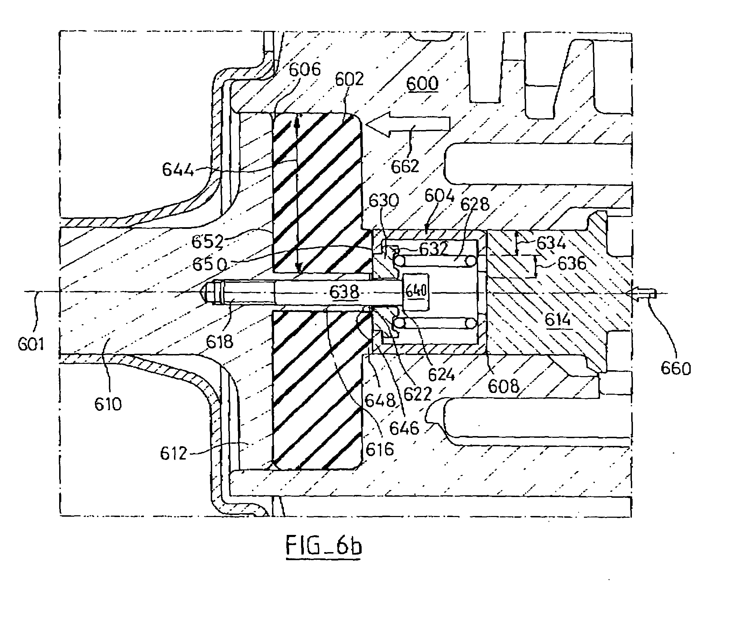

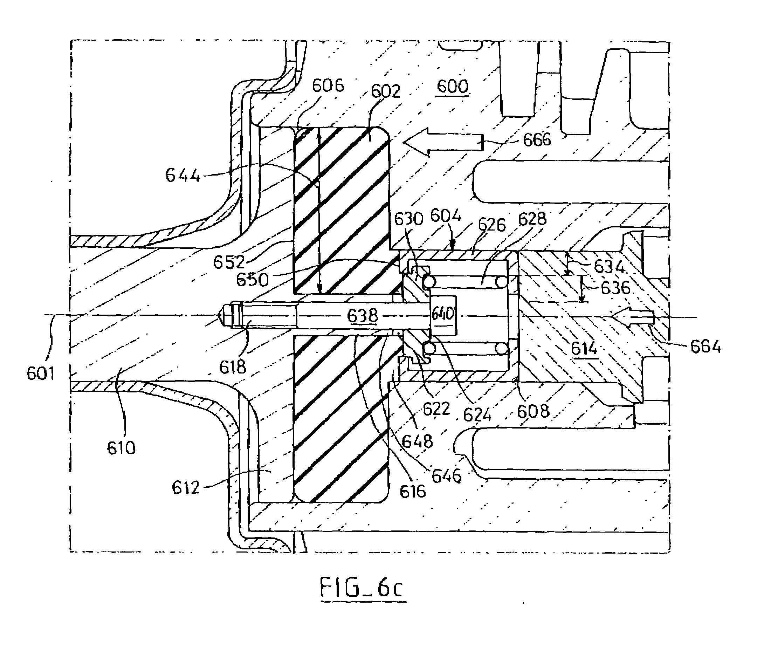

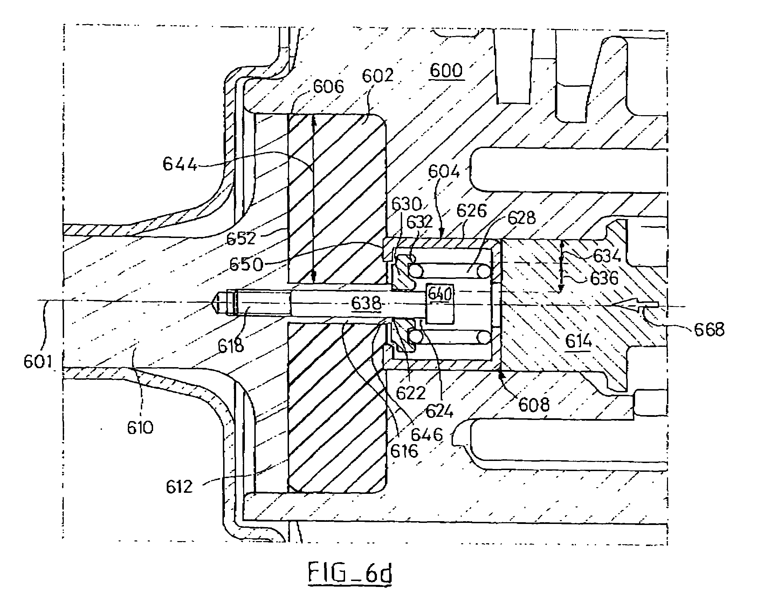

Les figures 6a, 6b, 6c et 6d représente une autre réalisation de l'invention.

La figure 6a représente une partie d'un servofrein conforme à cette réalisation de l'invention au repos.

Un élément de réaction élastique qui est dans cette réalisation un disque de réaction 602 occupe l'alésage cylindrique 606 compris à l'extrémité d'un organe d'assistance de ce servofrein comprenant un piston 600.

Cet alésage cylindrique 606 est fermé par le pied ou base 612 d'un tige de poussée 610 comprise dans un organe de sortie de ce servofrein.

Conformément à un des modes de l'invention, la tige de poussée 610 comprend des moyens de prolongation rigides, prolongeant axialement en son centre le pied 612 de la tige de poussée 610 au travers du disque de réaction 602, qui comprennent, dans cette réalisation, une saillie cylindrique 616 creuse traversant le centre du disque de réaction 602, et une vis 618 logée axialement dans la saillie cylindrique 616 et montée vissée dans un trou taraudé de la tige de poussée 612.

La face du pied 612 de la tige de poussée 610 reçoit donc la force de freinage assistée et exerce la force de réaction sur une surface annulaire 644 de la face de sortie du disque de réaction 602.

Cette surface annulaire 644 est la surface de la section de l'alésage cylindrique 606 moins la surface circulaire de la section de la saillie cylindrique 616.

Un conduit 608 coaxial avec l'alésage cylindrique 606 et traversant le corps du piston 600 débouche dans l'alésage cylindrique 606.

L'extrémité libre 646 de la saillie cylindrique 616 dépasse légèrement de la face d'entrée du disque de réaction 602 pour rentrer légèrement dans le conduit 608, sans toucher l'organe de délestage 604 quand ce dernier est au repos. En effet, il existe au repos un espace 620 entre la face d'entrée du disque de réaction 602 et la face de contact ou côté de sortie, en vis-à-vis suivant l'axe 601, de l'organe de délestage 604.

L'organe de délestage 604 peut coulisser dans le conduit 608 poussé sur son côté d'entrée opposée à sa face de contact par le moyen de distribution 614 qui coulisse aussi dans le conduit 608.

L'organe de délestage 614 comprend une enveloppe 626 tubulaire. Sa face d'entrée est évidée en son centre pour notamment fixer la vis 618 lors du montage du servofrein.

La face de contact comprend une surface 634 annulaire radiale en vis-à-vis du disque de réaction 602 et, au centre de cette surface annulaire radiale, un anneau 630, compris dans les moyens mobiles de l'invention, qui est coaxial à l'enveloppe 626 et mobile par rapport à cette dernière.

Cet anneau 630 est, au repos, plaqué par des moyens élastiques pré-contraints et compris dans l'organe de délestage 604, contre la surface annulaire radiale. Dans cette réalisation, ces moyens élastiques comprennent un ressort 628.

Ce ressort 628 est fixé sur le côté interne du côté d'entrée de l'organe de délestage 604 et sur le côté interne de l'anneau 630.

Une butée 632 empêche l'anneau 630 de sortir de l'organe de délestage 604. Il peut cependant coulisser axialement à l'intérieur de l'enveloppe 626 s'il est soumis à une force axiale de sens opposée et supérieure à la force de pré-contrainte du ressort 628 et si l'organe de délestage 604 subit une force opposée suffisante sur sa face d'entrée.

Au repos, la surface 636 radiale annulaire de l'anneau 630 est contiguë à la surface annulaire 634. Cette surface 636 est en vis-à-vis d'une partie du disque de réaction 602 et de l'extrémité libre 646 de la saillie 616 annulaire sur sa surface annulaire 642.

La vis 618 a une longueur suffisante pour que son corps 638 traverse le disque de réaction 602 (à l'intérieur de la saillie cylindrique 616) et l'anneau mobile 630, et pour que sa tête cylindrique 640, de diamètre radial supérieur à celui de son corps 638, soit logée à l'intérieur de l'enveloppe 626 tubulaire et réalise la fonction de butée de délestage ou butée d'intensité conforme à un des mode de l'invention pour l'anneau 630 si le ressort 628 se comprime.

D'ailleurs, l'anneau 630 coulisse le long du corps 638 de la vis 618.

Au repos, un jeu, dénommé jeu de vitesse 622, existe selon l'axe 601 entre l'extrémité 646 de la saillie 616 et l'anneau 630.

Un autre jeu 624, dénommé jeu d'intensité ou jeu de délestage, existe selon l'axe 601 entre l'anneau 630 et la tête 640 de la vis 618.

La figure 6b montre schématiquement l'état de cette même partie du servofrein conforme à cette réalisation de l'invention, lors d'un freinage commandé avec une intensité de la force de commande 660 inférieure à un seuil d'intensité et avec une vitesse d'application inférieure à un seuil de vitesse.

Le seuil d'intensité dépend directement de la charge du ressort, c'est à dire de la force nécessaire pour comprimer le ressort 628 pré-contraint et peut donc être fixé avantageusement à la conception du dispositif de réaction et du servofrein conformes à l'invention.

Le moyen de distribution 614 reçoit, lors d'un freinage, la force de commande 660 qu'il exerce alors sur le côté d'entrée de l'organe de délestage 604.

En même temps, le mouvement du moyen de distribution 614 fait entrer de l'air dans une chambre arrière du servofrein comme décrit ci-dessus et le piston 600 exerce une force d'assistance 662 sur une surface annulaire de la face d'entrée du disque de réaction 602.

Comme le disque de réaction 602 réagit alors de façon similaire à un liquide incompressible, il se déforme élastiquement de façon à s'amincir sur sa partie annulaire soumise directement à la pression du corps du piston 600, il envahit sur un volume 648 le conduit 608 et fait disparaître l'espace 620 de la figure 6a qui sépare au repos le disque de réaction 602 de l'organe de délestage 604.

Le disque de réaction 602 vient alors au contact de la face de contact de l'organe de délestage, c'est à dire de la surface annulaire 634 et de la surface annulaire 636 de l'anneau 632 (l'épaisseur radiale de la saillie cylindrique 616 étant négligeable dans cette réalisation par rapport à la surface 636).

En dessous du seuil d'intensité, ces deux surfaces sont contiguës et se comportent comme une surface unie transmettant la force de commande et recevant la force de résistance.

Les jeux de vitesse 622 et de d'intensité 624 existent dans cette configuration du dispositif de réaction.

Le rapport d'assistance de ce servofrein, quand l'intensité de la force de commande est en-dessous du seuil d'intensité et la vitesse d'application de la force de commande est inférieure au seuil de vitesse, est alors le rapport entre la force de sortie assistée et la force de commande mais aussi le rapport entre:
- un dividende: la surface effective de contact de sortie, c'est à dire la surface annulaire 644 sur laquelle se transmettent la force de sortie assistée du servofrein et la force de réaction remontant par la tige de poussée 610,
- un diviseur: la surface de commande, c'est à dire la somme des surfaces annulaires 634 et 636, qui transmet la force de commande 660 et reçoit la force de résistance.

La figure 6c décrit schématiquement l'état du même dispositif de réaction lorsque la force de commande 664 devient supérieure au seuil d'intensité mais l'application de cette force de commande se fait en dessous du seuil de vitesse.

L' application de la force de commande 664 entraîne la génération d'une force d'assistance 666. La pression interne du disque de réaction 602 augmente du fait des forces qu'il subit.

Comme auparavant, le disque de réaction 602 se déforme en envahissant le conduit 608 sur un volume 648 pour compenser son amincissement sur sa partie annulaire subissant la force d'assistance 666.

La force résultante de l'application de la pression interne du disque de réaction 602 sur la surface annulaire 636 de l'anneau 632 (à l'épaisseur de la saillie cylindrique près) devient supérieure à la charge du ressort 628.

Le ressort 628 est donc comprimé et l'anneau 630 vient alors buter contre la butée d'intensité qui est la tête 640 de la vis 618.

Le jeu 624 d'intensité existant en-dessous du seuil d'intensité entre l'anneau 630 et la tête 640 de la vis 618 disparaît.

Par contre, le jeu 622 de vitesse tend à s'agrandir car l'anneau 630 s'éloigne de l'extrémité libre 646 de la saillie 616.

Le jeu 624 disparaissant, la vis 618 étant vissée à la tige de poussée 610 et donc solidaire de cette dernière, la force issue de la pression interne du disque de réaction s'exerçant sur la surface annulaire 636 de l'anneau 630 se déleste sur la tige de poussée 610 au moins en partie et est décomptée de la force de résistance qui se trouve alors réduite

Le rapport d'assistance augmente donc une fois le seuil d'intensité dépassé car, pour obtenir une même force de sortie, la force de commande 664 nécessaire est réduite grâce à la réduction de la force de résistance.

On peut remarquer aussi que, si la surface de sortie reste constante, la surface de commande diminue car elle devient égale à la seule surface 634, la surface 636 ne transmettant plus la force de commande.

On peut remarquer aussi que, si avantageusement dans cette invention la butée de délestage (dans cette réalisation la tête de vis 640) est solidaire de l'organe de sortie (dans cette réalisation la tige de poussée 610), la partie de la force de résistance délestée une fois le seuil d'intensité atteint, est en fait transmise par le même organe de sortie au travers de l'élément de réaction (dans cette réalisation le disque de réaction 602) à l'organe d'assistance (dans cette réalisation le piston 600) pour venir accroître la partie de la force de réaction absorbée par cet organe d'assistance.

Cette réalisation de l'invention permet d'augmenter le rapport d'assistance quand la vitesse d'application de la force de commande est élevée lors d'un freinage d'urgence.

La figure 6d décrit schématiquement la configuration du dispositif de réaction conforme à cette invention lors d'un freinage d'urgence ou freinage à haute vitesse d'application, qui a été défini précédemment.

L'organe de délestage 604, subissant sur son côté d'entrée une force de commande 668, est poussé rapidement contre le disque de réaction 602, sur un laps de temps court.

Ce laps de temps doit être inférieur à la constante de réaction du servofrein, nécessaire au disque de réaction 602 pour se déformer suite à l'application d'une force de commande 668 au servofrein.

La course de l'anneau 630 vers le disque de réaction 602 est alors limitée par une butée de vitesse conforme à l'invention, qui est, dans cette réalisation, l'extrémité libre 646 de la saillie 616.

Si la force de commande 668 est supérieure à la charge du ressort 628, ce qui est le plus souvent le cas (lors d'un freinage d'urgence le conducteur ne peut doser précisément son freinage et tend à exercer une force de commande 668 importante), le ressort 628 se comprime.

Le reste de l'organe de délestage 604 continue sa course jusqu'à rentrer en contact avec le disque de réaction 602 et peut même (comme dans la figure 6d) pénétrer dans le disque de réaction 602.

Le jeu 622 disparaît donc et la surface 636 de l'anneau 630 ne peut pas rentrer en contact avec le disque de réaction 602.

Le rapport d'assistance augmente par rapport à celui d'un freinage plus lent, car la surface de commande sur le disque de réaction 602 est donc limitée à la surface 634 et la surface effective de sortie est maintenue constante.

Le conducteur est donc aidé lors du freinage d'urgence.

De même, on peut envisager une réalisation de l'invention où la vis 618 de la figure 6a n'a pas de tête 640: cette réalisation de l'invention comprend alors une butée de vitesse (l'extrémité de la saillie cylindrique 616) mais pas de butée d'intensité.

## Revendications

1. Servofrein selon la revendication 1, 2 ou 3, **caractérisé en ce que**, une face de sortie (652) de l'élément de réaction (602), opposée selon l'axe (601) à sa face d'entrée (650), exerçant une force de sortie sur une base (612) d'un organe de sortie (610), l'organe de sortie (610) comprend des moyens de prolongation (616,618) qui :
- sont fixés à cette base (612) de l'organe de sortie (610),
- sont orientés vers l'organe de délestage (604) en traversant l'élément de réaction (602),
- dépassent de la face d'entrée de l'élément de réaction (602),
la butée de vitesse (646) étant comprise sur la partie des moyens de prolongation (616,618) qui, quand le servofrein ne subit aucune force de commande, est entre la face d'entrée (650) de l'élément de réaction (602) et le côté de sortie en vis-à-vis de l'organe de délestage (604).

2. Servofrein selon la revendication 8, **caractérisé en ce que** les moyens mobiles (630) évidés en leur centre coulissent autour des moyens de prolongation (618).

3. Servofrein selon la revendication 8 ou 9, **caractérisé en ce que** les moyens de prolongation (616,618) comprennent une saillie cylindrique creuse (616) de la base (612) de l'organe de sortie (610), la saillie cylindrique creuse (616) étant coaxiale avec l'axe (601), traversant l'élément de réaction (602) et logeant en partie un élément cylindrique (638) fixé à la base (612) de l'organe de sortie (610), élément cylindrique (638) sur lequel coulissent les moyens mobiles (630) de l'organe de délestage (604), la saillie cylindrique creuse (616) ayant une longueur telle que, au repos du servofrein, l'extrémité libre (646) de cette saillie cylindrique creuse (616) soit comprise entre la face d'entrée (650) de l'élément de réaction (602) et les moyens mobiles (630), l'extrémité libre (646) étant la butée de vitesse (646).

4. Organe de sortie (610) d'un servofrein ayant un axe (601), le servofrein commandé par une force de commande générant une force d'assistance et comprenant un élément de réaction (602) élastique présentant une face d'entrée (650) perpendiculaire à l'axe (601) et une face de sortie (654) opposée axialement, l'élément de réaction (602) étant soumis sur sa face d'entrée (650) à:
- la force de commande (660,664,668) exercée par une surface de contact (634,636) d'un côté de sortie en vis-à-vis axial d'un organe de délestage (604) qui coulisse dans un conduit (608) axial d'un organe d'assistance (600) du servofrein,
- la force d'assistance (662,666) exercée par l'organe de d'assistance (604),
l'élément de réaction (602) exerçant sur sa face de sortie (654), une force de sortie sur une base (612) d'un organe de sortie (610), le côté de sortie de l'organe de délestage (604) comprenant des moyens mobiles (330) axialement, **caractérisé en ce que** la base (612) de l'organe de sortie (610) comprend des moyens de prolongation (616,618) traversant l'élément de réaction (602) et présentant une butée de vitesse (646) entre l'élément de réaction (602) et les moyens mobiles (630) pour, lorsque l'organe de délestage (604) est déplacé jusqu'à la butée de vitesse (646) dans le conduit vers l'élément de réaction (602) par rapport à l'organe d'assistance (600), arrêter la course des moyens mobiles (630) vers la face d'entrée (650) de l'élément de réaction (602).

5. Organe de sortie d'un servofrein d'assistance au freinage selon la revendication 13, **caractérisé en ce qu'**il est compris dans un servofrein conforme à l'une des revendications de 8 à 10.
